# FASCICULE DE BREVET EUROPEEN

(11) **EP 3 728 817 B1**
(45) Date de publication et mention de la délivrance du brevet: **09.11.2022**
(21) Numéro de dépôt: 18842431.1
(22) Date de dépôt: 20.12.2018
(51) Int. Cl.: F02C 7/36, F01D 5/02, F01D 25/16, F01D 21/08

(54) **TURBOMACHINE A REDUCTEUR POUR UN AERONEF**
TURBOLUFTSTRAHLTRIEBWERK MIT GETRIEBEFAN
GEARED TURBOFAN ENGINE

(30) Priorité: 22.12.2017 FR 1763045
(43) Date de publication de la demande: 28.10.2020
(73) Titulaire: SAFRAN AIRCRAFT ENGINES, 75015 Paris (FR)
(72) Inventeur: BECOULET, Julien, Fabien, Patrick, 77550 Moissy-Cramayel (FR); TAN-KIM, Alexandre, Jean-Marie, 77550 Moissy-Cramayel (FR); POMMIER, Nicolas, Auguste, Marcel, 77550 Moissy-Cramayel (FR); NEGRI, Arnaud, Nicolas, 77550 Moissy-Cramayel (FR); BRAULT, Michel, Gilbert, Roland, 77550 Moissy-Cramayel (FR)
(74) Mandataire: Gevers & Orès
(86) Numéro de dépôt international: PCT/FR2018/053443
(87) Numéro de publication internationale: WO 2019/122740

(56) Documents cités:
- EP-A2- 3 179 056
- FR-A1- 2 979 121
- US-A1- 2017 159 608

## Description

### DOMAINE TECHNIQUE

La présente invention concerne une turbomachine à réducteur d'aéronef.

### ETAT DE L'ART

Une turbomachine, telle qu'un turboréacteur à double flux, comprend classiquement une entrée d'air comportant une soufflante dont le flux d'air en sortie se divise en un flux d'air qui pénètre dans le moteur et forme un flux chaud ou flux primaire, et en un flux d'air qui s'écoule autour du moteur et qui forme un flux froid ou flux secondaire.

Le moteur comprend typiquement d'amont en aval, dans le sens d'écoulement des gaz, au moins un compresseur, une chambre de combustion, au moins une turbine, et une tuyère d'éjection dans laquelle les gaz de combustion sortant de la turbine et formant le flux primaire sont mélangés au flux secondaire. Une turbomachine peut également être du type à « double-corps » ce qui signifie qu'elle comporte deux rotors agencés coaxialement. Un premier corps est appelé corps basse pression et un second corps est appelé corps haute pression. De façon connue, le moteur comporte dans ce cas, d'amont en aval, un compresseur basse pression, un compresseur haute pression, la chambre de combustion, une turbine haute pression et une turbine basse pression.

Dans le cas d'une turbomachine à réducteur, l'arbre de turbine entraîne l'arbre de soufflante par l'intermédiaire du réducteur qui est lubrifié et logé dans une enceinte de lubrification. Selon le type de réducteur utilisé, planétaire ou épicycloïdal, l'arbre de soufflante va tourner dans le même sens ou dans le sens contraire à l'arbre de turbine, et l'arbre de soufflante va tourner à une vitesse moins importante que celle de l'arbre de turbine.

L'arbre de turbine, qui est l'arbre de turbine basse pression dans le cas d'une turbomachine à double corps, est en général accouplé à un arbre du compresseur basse pression qui est lui-même accouplé à un arbre d'entrée du réducteur. Cet arbre d'entrée traverse le réducteur et engrène un solaire de ce dernier.

Pour assurer un bon fonctionnement de cette ligne d'arbres basse pression et notamment du réducteur, il faut transmettre le couple mais, en même temps, obtenir une certaine souplesse dans l'arbre d'entrée du réducteur pour ne pas perturber le fonctionnement de cette ligne d'arbres et des éléments internes du réducteur, mais aussi pour assurer un bon alignement des éléments internes du réducteur.

Les valeurs de souplesse de l'arbre d'entrée peuvent être très élevées et la solution imaginée à l'origine consistait à faire des soufflets sur l'arbre. Cependant, pour respecter des valeurs de souplesse si élevées, il aurait fallu prévoir plusieurs soufflets adjacents, ce qui se traduirait par un encombrement radial et axial trop important et interdirait son intégration dans la turbomachine.

Une variante décrite dans le document FR-A1-2 979 121 consiste à assouplir l'arbre d'entrée en le fixant à son arbre d'entraînement par l'intermédiaire d'une ou plusieurs fixations du type flex coupling. Chaque fixation comprend deux parties annulaires à section en L dont les branches radiales sont écartées l'une de l'autre et fixées l'une à l'autre par des brides annulaires périphériques. Cette solution est également encombrante radialement.

La présente invention apporte une solution simple, efficace et économique à ce problème au moyen d'un système de liaison optimisé entre deux arbres ou portions d'arbre.

### EXPOSE DE L'INVENTION

L'invention propose une turbomachine à réducteur d'aéronef, comportant un premier arbre et un second arbre ayant un même axe de rotation, le second arbre étant entraîné en rotation via un réducteur par le premier arbre, le premier arbre comportant des premiers moyens élastiquement déformables lui conférant une certaine souplesse en fonctionnement, lesdits moyens déformables comportant au moins un premier soufflet annulaire s'étendant autour dudit axe, caractérisée en ce que le premier arbre comporte une portion accouplée au réducteur par un système de liaison comprenant un arbre d'entrée, l'arbre d'entrée comportant des premières cannelures d'accouplement au réducteur et des secondes cannelures d'accouplement à des troisièmes cannelures complémentaires de ladite portion dudit premier arbre, la portion dudit premier arbre ayant une forme générale tubulaire autour dudit axe, et comprenant une partie aval comportant ledit au moins un premier soufflet et une partie amont sensiblement cylindrique qui est entourée par ledit arbre d'entrée, cet arbre d'entrée comportant au moins une partie annulaire qui s'étend autour dudit axe et qui a une section sensiblement en U ou C et définit une ouverture annulaire autour dudit axe, cette partie annulaire formant des seconds moyens élastiquement déformables lui conférant une certaine souplesse en fonctionnement.

L'invention propose ainsi de bénéficier des avantages combinés de deux technologies pour conférer de la souplesse au système de liaison. La partie annulaire à section en C ou U confère une souplesse et permet de limiter l'encombrement du système. Lorsque l'ouverture est orientée axialement, la partie annulaire forme une épingle et confère une souplesse en direction radiale par rapport à l'axe. Lorsque l'ouverture est orientée radialement, la partie annulaire forme un autre soufflet. Le ou les soufflets confèrent une souplesse en direction axiale et en flexion. L'invention propose ainsi d'intégrer deux moyens élastiquement déformables, respectivement au premier arbre et à l'arbre d'entrée du réducteur. Le premier arbre est par exemple un arbre de turbine ou de compresseur basse pression dans le cas évoqué plus haut.

La turbomachine selon l'invention peut comprendre une ou plusieurs des caractéristiques suivantes, prises isolément les unes des autres ou en combinaison les unes avec les autres :
- ladite partie annulaire à section en U définit une ouverture annulaire qui débouche en direction axiale,
- ledit au moins un premier soufflet s'étend radialement entre un diamètre sensiblement égal à celui desdites troisièmes cannelures et un diamètre sensiblement égal à celui desdites premières cannelures,
- ledit arbre d'entrée comprend une branche annulaire externe d'accouplement audit réducteur, et une branche annulaire interne d'accouplement à la partie amont dudit premier arbre ; les moyens déformables sont donc portés par les deux arbres, l'épingle étant formée par l'arbre d'entrée et le ou les premiers soufflets étant portés par le second arbre (l'arbre du compresseur basse pression dans l'exemple précité) ;
- les branches sont reliées entre elles par une âme annulaire présentant un amincissement d'épaisseur au niveau de sa liaison à ladite branche externe ;
- la branche externe a une extrémité aval située à proximité d'une extrémité amont dudit au moins un premier soufflet, et/ou un diamètre qui est supérieur à un diamètre externe dudit au moins un premier soufflet ; cette configuration permet de limiter l'encombrement, en particulier axial, du système de liaison ;
- au moins une partie dudit au moins un premier soufflet est entourée par ladite branche externe, pour limiter encore davantage l'encombrement du système ;
- la branche interne se prolonge vers l'amont au-delà de l'âme et porte des léchettes annulaires externes qui coopère par effet labyrinthe avec la périphérie interne d'un capot annulaire porté par ledit second arbre ; ce capot peut participer à l'étanchéité de l'enceinte de lubrification dans laquelle est logé le réducteur ;
- le nombre de premiers soufflets est supérieur à deux ;
- ladite épingle est située d'un côté dudit réducteur et ledit au moins un soufflet est situé de l'autre côté dudit réducteur et/ou traverse axialement ledit réducteur ;
- le système de liaison comprend une portion dudit premier arbre et un arbre d'entrée comportant des premières cannelures d'accouplement de cette portion au réducteur ;
- ladite partie amont sensiblement cylindrique comprend des secondes cannelures d'accouplement audit arbre d'entrée ;
- ledit au moins un soufflet s'étend radialement entre un diamètre sensiblement égal à celui desdites premières cannelures et un diamètre sensiblement égal à celui desdites secondes cannelures ;
- ledit premier arbre est un arbre de compresseur basse pression ;
- ladite partie annulaire à section en U définit une ouverture annulaire qui débouche radialement vers l'intérieur, cette partie annulaire formant un second soufflet ;
- le premier soufflet est situé en aval du réducteur, et le second soufflet est situé en amont du réducteur ;
- ladite partie annulaire est une partie axiale intermédiaire de l'arbre d'entrée qui comprend un partie cylindrique amont comportant lesdites secondes cannelures, ainsi qu'une partie cylindrique aval comportant lesdites premières cannelures ;
- au moins certaines desdites cannelures comprennent des faces latérales bombées, ces faces latérales s'étendant entre les extrémités longitudinales de ces cannelures ;
- au moins certaines desdites cannelures ont leurs extrémités longitudinales tronquées par usinage pour leur conférer un profil bombé ; et le ou chaque soufflet comprend un fond annulaire qui comprend une pluralité d'orifices de passage d'huile en fonctionnement.

La présente invention concerne également un procédé de montage d'une turbomachine telle que décrite ci-dessus, comprenant les étapes consistant à :
- relier ledit second arbre, qui est un arbre de soufflante, à un arbre de sortie dudit réducteur et engager axialement sur ledit arbre de soufflante des paliers ainsi que leur support,
- engager un arbre d'entrée axialement à l'intérieur dudit réducteur, jusqu'à ce que des cannelures de cet arbre coopèrent avec les premières cannelures d'un solaire du réducteur,
- monter cet assemblage dans un carter intermédiaire et le fixer à ce carter par des moyens appropriés,
- monter des moyens d'alimentation en huile desdits paliers, et
- engager ledit premier arbre par translation axiale dans ledit arbre d'entrée jusqu'à leur accouplement par les secondes et troisièmes cannelures et fixer ledit support des paliers au carter intermédiaire.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique en coupe axiale d'une turbomachine à réducteur d'aéronef,
- la figure 2 est une demi vue schématique à plus grande échelle d'une partie de la figure 1 et représente la technique antérieure à l'invention,
- la figure 3 est une vue similaire à celle de la figure 2 et représente un mode de réalisation schématique de l'invention,
- la figure 4 est une vue à plus grande échelle d'une partie de la figure 3 et illustre un exemple plus concret de réalisation de l'invention,
- les figures 5 à 9 sont des vues similaires à celle de la figure 3 et illustrent des étapes de montage de la turbomachine,
- la figure 10 est une vue similaire à celle de la figure 2 et représente une variante de réalisation schématique de l'invention,
- la figure 11 est une vue schématique de la variante de réalisation de la figure 10,
- la figure 11a est une vue de détail de cannelures de la variante de réalisation de la figure 10,
- la figure 12 est une vue similaire à celle de la figure 10 et montrant la circulation d'huile de lubrification, et
- la figure 13 est une vue schématique partielle en perspective d'un détail de la variante de réalisation de la figure 10.

### DESCRIPTION DETAILLEE

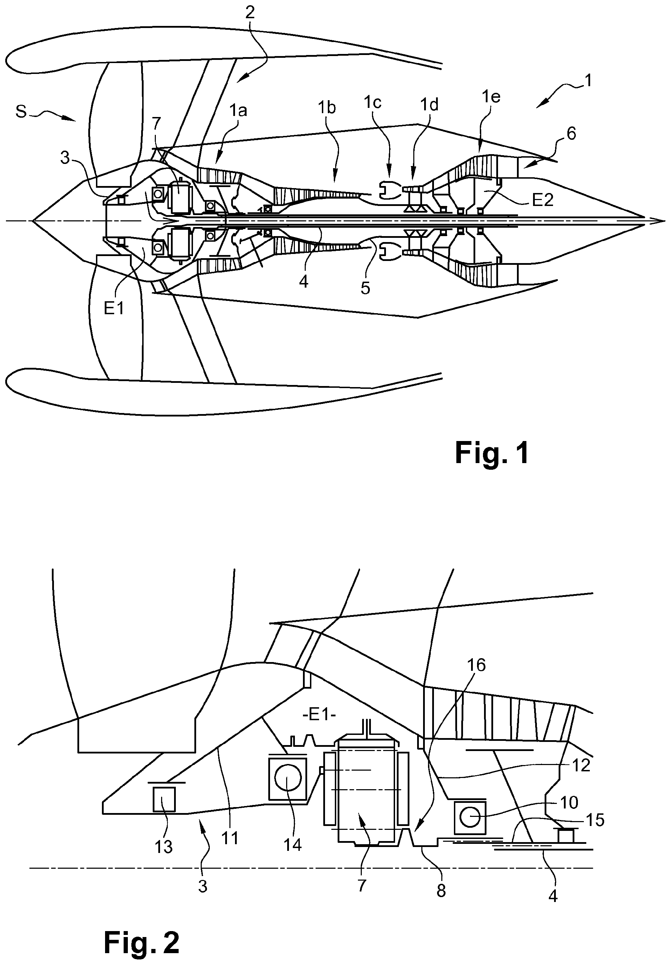

En se référant à la figure 1, on voit une turbomachine 1 à réducteur, qui comporte, de manière classique, une soufflante S, un compresseur basse pression 1a, un compresseur haute pression 1b, une chambre de combustion 1c, une turbine haute pression 1d et une turbine basse pression 1e. Les rotors du compresseur haute pression 1b et de la turbine haute pression 1d sont reliés par un arbre haute pression 5 et forment avec lui un corps haute pression (HP). Les rotors du compresseur basse pression 1a et de la turbine basse pression 1e sont reliés par un arbre basse pression 4 et forment avec lui un corps basse pression (BP). L'arbre 3 de la soufflante S est entrainé par l'intermédiaire d'un réducteur 7 par l'arbre BP 4

Les arbres HP 5 et BP 4 s'étendent suivant un axe qui est l'axe de rotation de la turbomachine 1. Dans la suite de la description, les notions de longitudinal ou radial, et d'intérieur ou extérieur, sont relatives à cet axe et les notions de amont et aval font référence à l'écoulement des gaz dans la turbomachine.

La turbomachine 1 comprend des carters structuraux. Le corps HP est tenu par deux carters structuraux : le carter inter-compresseurs et le carter inter-turbines, et le corps BP est tenu par au moins deux carters structuraux : le carter intermédiaire 2 et le carter inter-turbine et/ou le carter d'échappement 6.

Le carter intermédiaire 2 soutient des paliers de l'arbre de turbine BP 4 qui sont logés dans une enceinte avant ou amont notée E1. Le carter d'échappement 6 soutient des paliers de l'arbre de turbine BP 4 qui sont logés dans une enceinte arrière ou aval notée E2.

Le réducteur 7 est ici de type épicycloïdal. La figure 2 montre de manière très schématique l'encombrement du réducteur. Le réducteur 7 comprend un arbre d'entrée 8 s'étendant en amont de l'arbre BP 4 et qui est guidé par un palier 10 aval.

Plus précisément, l'arbre d'entrée 8 comprend une extrémité axiale, ici amont, engagée dans le réducteur 7 et engrenée avec un solaire du réducteur, qui est lui-même engrené avec les satellites du réducteur. L'arbre d'entrée 8 a son extrémité aval qui est engrené avec un arbre 15 du compresseur basse pression qui est lui-même engrené avec l'arbre 4. Le palier 10 s'étend ici autour de l'arbre 15.

Le couple en sortie du réducteur 7 est transmis à l'arbre de soufflante 3, par une liaison classique, comme par exemple une fixation de cet arbre de soufflante sur le porte-satellites formant un arbre de sortie du réducteur, dans le cas d'un réducteur épicycloïdal. Dans le cas d'un réducteur planétaire, l'arbre de soufflante serait entrainé par la couronne. Le réducteur est placé à l'intérieur de l'enceinte avant E1 de lubrification.

L'enceinte E1 comprend des parois fixes et des parois mobiles. Les parois fixes de l'enceinte E1 comprennent une paroi interne de la veine du flux primaire, d'un support amont de palier 11 et d'un support aval de palier 12. Les supports 11 et 12 s'étendent vers l'intérieur de la turbomachine et portent respectivement les paliers 13, et le palier 10. Ils assurent la structure entre les carters et les bagues externes fixes des paliers. Les parois mobiles de l'enceinte E1 comprennent les arbres d'entrée 8 et de soufflante 3. Les paliers 10, 13, 14 sont logés dans l'enceinte E1. Des étanchéités, non visibles sur les schémas sont prévues entre les parois fixes et mobiles et sont par exemple des joints labyrinthe, joints à brosse, joint radiaux segmenté, etc.

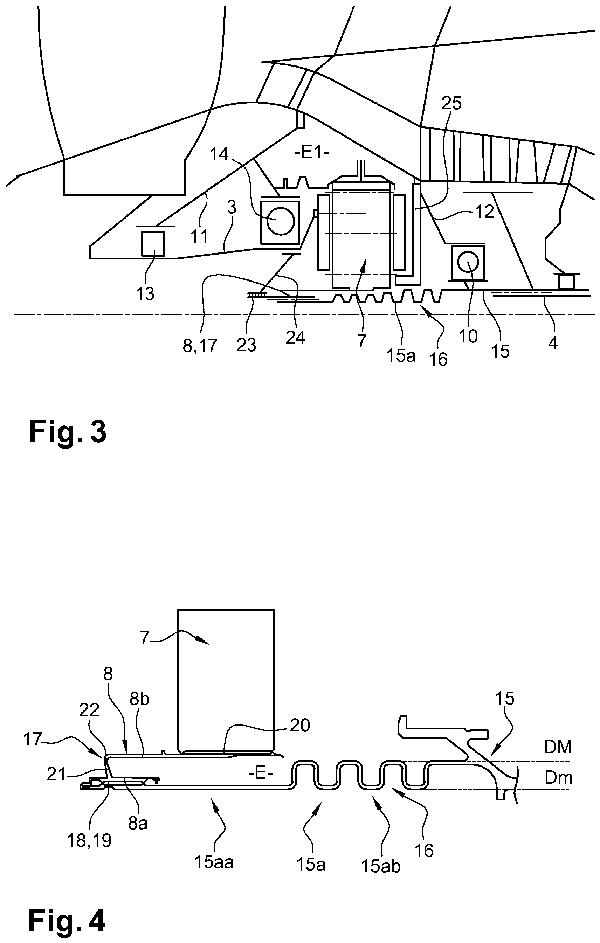

Les paliers 10, 13 et 14 ainsi que le réducteur 7 sont lubrifiés pour leur bon fonctionnement. L'huile est amenée par des moyens appropriés tels que des gicleurs, des conduits d'amenée d'huile, etc. Le support de palier 11 comprend des trous de ventilation qui laissent passer de l'air de ventilation de l'enceinte. L'enceinte E1 est configurée pour que le mélange air-huile, qui forme un brouillard d'huile à l'intérieur de l'enceinte, soit contenu dans cette dernière., Entre les parois de rotor et de stator de l'enceinte, par exemple ici aux extrémités amont et aval de l'enceinte, des étanchéités (telles que des labyrinthes) sont placées pour contenir l'huile, et un circuit d'air vient pressuriser ces étanchéités pour éviter les fuites d'huile. Les moyens d'étanchéité peuvent être entre une paroi mobile et une paroi fixe de l'enceinte ou entre deux parois mobiles, comme c'est le cas d'une étanchéité entre deux arbres, et en particulier entre les arbres 3, 8 (visible à la figure 3). Un débit de gaz est prélevé du compresseur BP ou HP de la turbomachine et alimente toutes les étanchéités de l'enceinte E1.

L'enceinte E1 se trouve alors pressurisée (de l'air y entre en continu, repoussant l'huile qui aurait pu sortir des étanchéités par capillarité) et les paliers fonctionnent dans un milieu d'huile et d'air mélangés. L'huile reste contenue dans le circuit de lubrification. L'alimentation des paliers est assurée par un tube d'alimentation 25 et la récupération est assurée par un tube de récupération spécifique placé en général à un point bas de l'enceinte. Pour éviter une surpression de l'enceinte, et permettre un flux constant d'air entrant, l'intérieur de l'enceinte est mise à l'air à pression plus faible que la pression de l'air entrant dans les étanchéités. Cet air chargé de particules d'huile, qui est évacué au niveau d'un puits de pression, doit d'abord être traité pour récupérer la quasi-totalité de l'huile qu'il véhicule. Pour cela, l'air huilé sera amené à un déshuileur qui séparera l'air de l'huile qu'il véhicule et rejettera l'air déshuilé à l'extérieur du moteur. C'est le principe de déshuilage d'une enceinte.

La figure 2 représente la technique antérieure à l'invention dans laquelle l'arbre d'entrée 8 du réducteur 2 comprend des moyens élastiquement déformables, ici à soufflets 16, conférant une certaine souplesse à l'arbre 8 et donc au système de liaison entre les arbres 4, 15 et le réducteur 7.

Cependant, pour respecter des valeurs de souplesse élevées de l'arbre 8, il faudrait prévoir plusieurs soufflets adjacents, ce qui se traduirait par un encombrement radial et axial trop important et interdirait son intégration dans la turbomachine.

La figure 3 illustre un mode de réalisation de l'invention dans laquelle le système de liaison entre les arbres 4, 15 et le réducteur 7 comprend des moyens déformables à soufflets 16 et à épingle 17.

Le ou les soufflets 16 sont ici portés par une portion d'arbre 15a de l'arbre 15, qui est avantageusement formée d'une seule pièce avec ce dernier. L'épingle 17 est formée par l'arbre d'entrée 8 et s'étend radialement entre la portion d'arbre 15a et le réducteur 7.

Les soufflets 16 peuvent s'étendre d'un côté du réducteur 7, ici en aval, et la liaison en épingle peut s'étendre de l'autre côté du réducteur, ici en amont. Comme on le voit à la figure 3, les soufflets peuvent s'étendre en partie radialement à l'intérieur du réducteur 7.

On se réfère maintenant à la figure 4 qui représente un exemple plus concret de réalisation de l'invention.

La portion 15a de l'arbre 15 a une forme générale tubulaire autour de l'axe de la turbomachine, et comprend une partie aval 15ab comportant le ou les soufflets 16 et une partie amont 15aa sensiblement cylindrique qui est au moins en partie entourée par l'arbre d'entrée 8. Cette partie amont 15aa comprend à une extrémité amont des cannelures d'accouplement 18 qui sont engagées dans des cannelures d'accouplement 19 complémentaires de l'arbre d'entrée 8.

Dans l'exemple représenté, le nombre de soufflets 16 est supérieur à deux. Les soufflets sont préférentiellement identiques.

La portion 15a comprend un diamètre externe défini par le diamètre maximal DM des soufflets 16, et un diamètre interne défini par le diamètre minimal Dm de ces soufflets. La partie aval 15ab est reliée au reste de l'arbre 15 par une paroi cylindrique de diamètre maximal DM, et la partie amont 15aa a un diamètre Dm.

L'arbre d'entrée 8 comprend une branche annulaire externe 8b d'accouplement au réducteur 7, et une branche annulaire interne 8a d'accouplement à la portion 15a de l'arbre 15. La branche externe 8b comprend ainsi des cannelures 20 d'accouplement au solaire du réducteur et sa branche interne 8a comprend les cannelures 19 précitées.

Les branches 8a, 8b sont reliées entre elles par une âme annulaire 21 située à l'amont et présentant un amincissement d'épaisseur 22 au niveau de sa liaison à la branche externe 8a. L'âme 21 peut avoir en section une orientation radiale, s'étendant de l'aval vers l'amont radialement vers l'extérieur.

Comme on le voit dans les dessins, la branche externe 8b a une extrémité aval située à proximité d'une extrémité amont des soufflets 16. Cette branche externe 8b a un diamètre qui est supérieur au diamètre DM. Dans le cas où le nombre de soufflets 16 est important, comme dans l'exemple représenté, ou si ces soufflets ont une grande dimension axiale cumulée, ils peuvent être logés en partie au moins dans l'espace annulaire E délimité par la branche externe 8b.

De préférence, la branche interne 8a se prolonge vers l'amont au-delà de l'âme 21 et porte des léchettes annulaires externes 23 qui coopèrent par effet labyrinthe avec la périphérie interne d'un capot annulaire 24 porté par l'arbre de soufflante 3 (voir figure 3). Les léchettes 23 forment ainsi des moyens d'étanchéité de l'enceinte E1, ici entre les arbres 3 et 8.

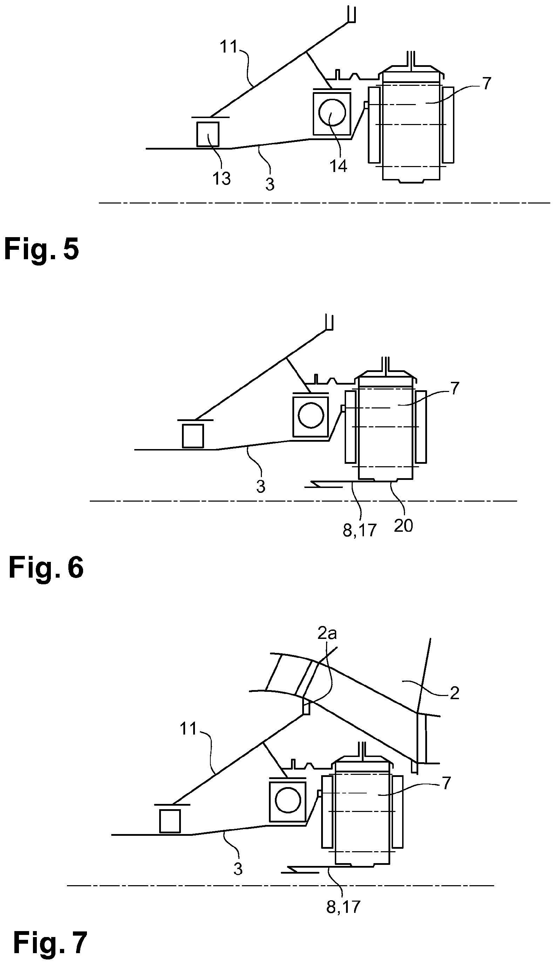

On se réfère maintenant aux figures 5 à 9 qui représentent des étapes de montage de la turbomachine.

La première étape illustrée à la figure 5 consiste à relier l'arbre de soufflante 3 à l'arbre de sortie du réducteur et à engager axialement sur l'arbre de soufflante les paliers 13, 14 ainsi que leur support 11.

L'arbre d'entrée 8 du réducteur est ensuite engagé axialement à l'intérieur du réducteur, jusqu'à ce que ses cannelures 20 coopèrent avec celles du solaire du réducteur (figure 6).

L'ensemble est alors monté dans le carter intermédiaire 2 de la turbomachine et est fixé à ce carter par des moyens appropriés, par exemple au moyen de brides 2a et d'une série de vis-écrou (figure 7).

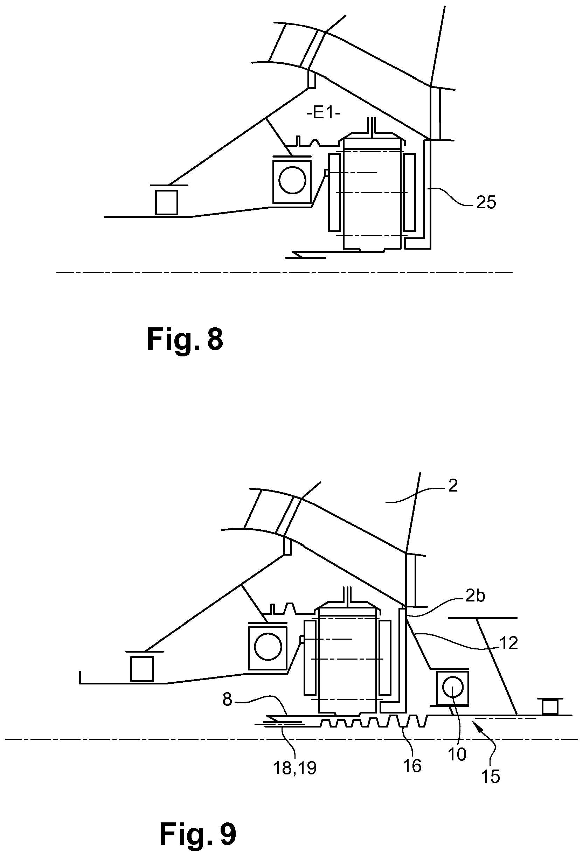

Des moyens 25 d'alimentation en huile de l'enceinte E1 de lubrification du réducteur 7 sont ensuite montés (figure 8).

Enfin, les arbres 4 et 15 sont engagés par translation axiale depuis l'aval, l'arbre 15 étant destiné à être engagé dans l'arbre 8 jusqu'à ce que leurs cannelures 18, 19 s'engagent les unes dans les autres. Le support de palier 12 est alors fixé au carter intermédiaire 2 par des moyens appropriés, par exemple au moyen de brides 2b et d'une série de vis-écrou (figure 9).

Les moyens déformables selon l'invention confèrent une souplesse optimisée au système de liaison entre les arbres 4, 15 et le réducteur 7, en particulier en direction axiale, radiale et en flexion. A titre d'exemple, la souplesse radiale peut être de l'ordre de 2×10⁻⁸ m/N à 2.10⁻⁵ m/N et préférentiellement 2.10⁻⁶ m/N, et la souplesse angulaire de l'ordre de 4.10⁻⁵ à 3.10⁻⁷ et préférentiellement 3×10⁻⁶ rad/N.m.

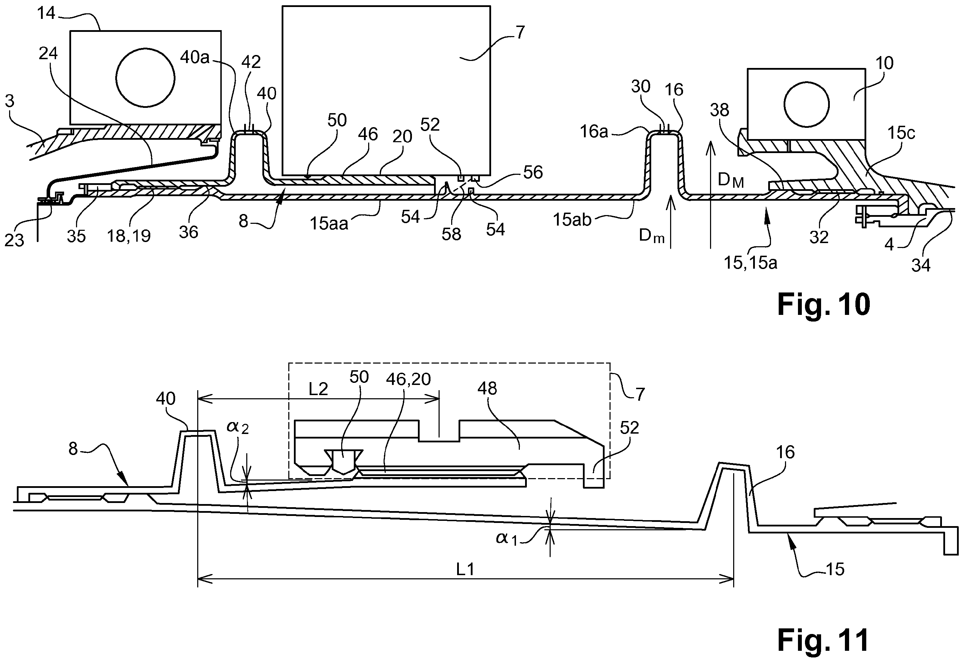

Les figures 10 à 13 illustrent une variante de réalisation de l'invention dans laquelle les éléments déjà décrits dans ce qui précède sont désignés par les mêmes références.

L'arbre 15 comprend un seul soufflet 16 dont le fond annulaire 16a est percé d'orifices 30 de passage d'huile de lubrification en fonctionnement. L'extrémité aval de l'arbre 15 comprend ici des cannelures 32 d'accouplement à un tourillon 15c de support du palier 10, ce tourillon étant lui-même accouplé par des cannelures 34 à l'arbre BP 4.

L'extrémité amont de l'arbre 15 comprend les cannelures 18. Les cannelures 18 sont situées entre, à l'amont un filetage de vissage d'un écrou 35, et à l'aval, une surface cylindrique externe 36 de centrage. Une surface cylindrique externe 38 similaire peut être située sur l'arbre 15 juste en amont des cannelures 32.

Le soufflet 16 s'étend radialement entre les diamètres Dm et DM, les cannelures 18 et 32 étant sensiblement situées au niveau du diamètre Dm,

L'épingle de l'arbre 8 est ici remplacée par un soufflet 40 dont le fond annulaire 40a est percé d'orifices 42 de passage d'huile de lubrification en fonctionnement. L'extrémité aval de l'arbre 8 comprend les cannelures 20 et son extrémité amont comprend les cannelures 19.

L'arbre 8 est engagé coaxialement sur l'arbre 15 par translation axiale depuis l'amont jusqu'à ce que les cannelures 18, 19 soient engagées les unes dans les autres. La surface 36 est alors en appui sur une surface cylindrique interne de l'arbre 8, située ici en amont du soufflet 40. La surface 38 est en outre en appui sur une surface cylindrique interne du tourillon 15c. L'écrou 35 est alors vissé sur le filetage de l'arbre 15 et prend appui axialement sur l'arbre 8 pour le maintenir fixement sur l'arbre 15.

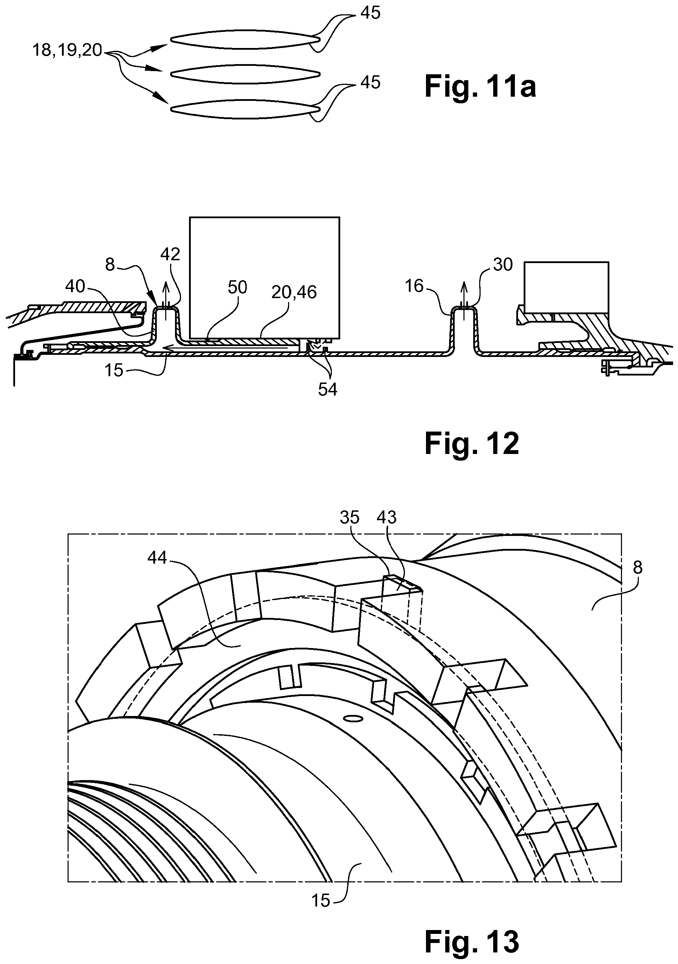

Comme on le voit à la figure 13, une rondelle frein 43 et un anneau de verrouillage 44 sont ensuite rapportés sur l'arbre 15. La rondelle frein 43 coopère par crabotage avec l'écrou 35 pour empêcher un desserrage accidentel de l'écrou 35 et l'anneau de verrouillage 44 bloque axialement la rondelle 43 sur l'arbre 15.

Les cannelures 18, 19, 20, voire 32 et 34 comprennent de préférence des extrémités longitudinales tronquées qui peuvent être réalisées par meulage par exemple. Les cannelures sont de préférence bombées c'est-à-dire que leurs faces latérales, s'étendant axialement entre leurs extrémités longitudinales, présentent une convexité, comme cela est visible à la figure 11a. La forme bombée des cannelures leur confère une certaine liberté de mouvement par rotulage en limitant les contraintes dans les cannelures.

Les cannelures 20 coopèrent avec des cannelures 46 complémentaires d'un solaire 48 du réducteur 7, ces cannelures 46 étant interrompues par une gorge annulaire dans laquelle est logé un joint annulaire d'étanchéité 50 (figure 11). La gorge et le joint 50 sont situés au voisinage de l'extrémité amont du solaire 48. L'extrémité aval du solaire 48 comprend au moins un rebord annulaire 52 orienté radialement vers l'intérieur et situé axialement entre deux lèvres annulaires 54 en saillie sur l'arbre 15 (figures 10 et 11).

Le réducteur 7 peut porter au moins un gicleur d'huile 56 pour la projection d'un jet d'huile 58 de lubrification entre les deux lèvres 54. Le gicleur 56 est ici situé à l'extrémité aval et radialement interne du réducteur 7

La figure 12 montre le cheminement de l'huile en fonctionnement.

L'huile projetée entre les lèvres 54 est centrifugée et projetée vers les cannelures 20, 46. Le joint 50 limite le passage de cette huile axialement vers l'amont. De l'huile s'écoule en outre à l'intérieur de l'arbre 8 et peut s'échapper à travers les orifices 42 du soufflet 40. De l'huile s'écoule en outre à l'intérieur de l'arbre 15 et peut s'échapper à travers les orifices 30 du soufflet 16.

La figure 11 montre la longueur ou dimension axiale L1 entre les soufflets 16, 40 et la dimension axiale L2 entre le soufflet 40 et le milieu des cannelures 20, 46 ou du solaire 48. L'augmentation de la dimension L2 permet de réduire l'angle α2 de déformation élastique de l'arbre 8, entre sa position cylindrique à l'état libre et sa position déformée représentée dans le dessin dans laquelle son extrémité aval est écartée radialement vers l'extérieur. L'augmentation de la dimension L1 permet de réduire l'angle α1 de déformation élastique de l'arbre 15, entre sa position cylindrique à l'état libre et sa position déformée représentée dans le dessin dans laquelle son extrémité aval est écartée radialement vers l'intérieur. La forme bombée des cannelures permet de conserver un accouplement des arbres 15, 8 dans ces positions déformées. Lors de ces déformations, les soufflets 16, 40 se déforment en se comprimant ou se dilatant.

## Revendications

1. Turbomachine (1) à réducteur d'aéronef, comportant un premier arbre (15) et un second arbre (3) ayant un même axe de rotation, le second arbre étant entraîné en rotation via un réducteur (7) par le premier arbre, le premier arbre comportant des premiers moyens élastiquement déformables lui conférant une certaine souplesse en fonctionnement, lesdits premiers moyens déformables comportant au moins un premier soufflet annulaire (16) s'étendant autour dudit axe, **caractérisée en ce que** le premier arbre (15) comporte une portion (15a) accouplée au réducteur (7) par un système de liaison comprenant un arbre d'entrée (8), l'arbre d'entrée (8) comportant des premières cannelures (20) d'accouplement au réducteur (7) et des secondes cannelures (19) d'accouplement à des troisièmes cannelures (18) complémentaires de ladite portion (15a) dudit premier arbre (15), la portion (15a) dudit premier arbre (15) ayant une forme générale tubulaire autour dudit axe, et comprenant une partie aval (15ab) comportant ledit au moins un premier soufflet (16) et une partie amont (15aa) cylindrique qui est entourée par ledit arbre d'entrée (8), cet arbre d'entrée comportant au moins une partie annulaire (17) qui s'étend autour dudit axe et qui a une section en U ou C et définit une ouverture annulaire autour dudit axe, cette partie annulaire formant des seconds moyens élastiquement déformables lui conférant une certaine souplesse en fonctionnement.

2. Turbomachine selon la revendication 1, dans laquelle ladite partie annulaire (17) à section en U définit une ouverture annulaire qui débouche en direction axiale.

3. Turbomachine (1) selon l'ensemble des revendications précédentes dans laquelle ledit au moins un premier soufflet (16) s'étend radialement entre un diamètre (Dm) égal à celui desdites troisièmes cannelures (18) et un diamètre (DM) égal à celui desdites premières cannelures (20).

4. Turbomachine (1) selon l'une des revendications précédentes, dans laquelle ledit arbre d'entrée (8) comprend une branche annulaire externe (8b) d'accouplement audit réducteur (7), et une branche annulaire interne (8a) d'accouplement à la partie amont (15aa) dudit premier arbre (15).

5. Turbomachine (1) selon la revendication 4, dans laquelle les branches (8a, 8b) sont reliées entre elles par une âme annulaire (21) présentant un amincissement d'épaisseur (22) au niveau de sa liaison à ladite branche externe (8b).

6. Turbomachine (1) selon la revendication 3 ou 4, dans laquelle la branche externe (8b) a une extrémité aval située à proximité d'une extrémité amont dudit au moins un premier soufflet (16), et/ou un diamètre qui est supérieur à un diamètre externe dudit au moins un premier soufflet.

7. Turbomachine (1) selon l'une des revendications 3 à 5, dans laquelle au moins une partie dudit au moins un premier soufflet (16) est entourée par ladite branche externe (8b).

8. Turbomachine (1) selon l'une des revendications 3 à 6, dans laquelle la branche interne (8a) se prolonge vers l'amont au-delà de l'âme (21) et porte des léchettes annulaires externes (23) qui coopèrent par effet labyrinthe avec la périphérie interne d'un capot annulaire (24) porté par ledit second arbre (3).

9. Turbomachine (1) selon l'une des revendications précédentes, dans laquelle le nombre de premiers soufflets (16) est supérieur à deux.

10. Turbomachine selon la revendication 1, dans laquelle ladite partie annulaire (17) à section en U définit une ouverture annulaire qui débouche radialement vers l'intérieur, cette partie annulaire formant un second soufflet (40).

11. Turbomachine selon la revendication 10, dans laquelle le premier soufflet (17) est situé en aval du réducteur (7), et le second soufflet (40) est situé en amont du réducteur (7).

12. Turbomachine selon la revendication 10 ou 11, dans laquelle ladite partie annulaire (17) est une partie axiale intermédiaire de l'arbre d'entrée (8) qui comprend un partie cylindrique amont comportant lesdites secondes cannelures (19), ainsi qu'une partie cylindrique aval comportant lesdites premières cannelures (20).

13. Turbomachine (1) selon l'une des revendications précédentes, dans laquelle au moins certaines desdites cannelures (18, 19, 20) ont leurs extrémités longitudinales tronquées par usinage.

14. Turbomachine (1) selon l'une des revendications précédentes, dans laquelle au moins certaines desdites cannelures (18, 19, 20) comprennent des faces latérales bombées, ces faces latérales s'étendant entre les extrémités longitudinales de ces cannelures.

15. Turbomachine (1) selon l'une des revendications précédentes, dans laquelle le ou chaque soufflet (16, 40) comprend un fond annulaire (16a, 40a) qui comprend une pluralité d'orifices (30, 42) de passage d'huile en fonctionnement.

16. Turbomachine (1) selon l'une des revendications précédentes, dans laquelle ledit premier arbre (15) est un arbre de compresseur basse pression.

17. Procédé de montage d'une turbomachine selon l'une des revendications précédentes, comprenant les étapes consistant à :
- relier ledit second arbre (3), qui est un arbre de soufflante, à un arbre de sortie dudit réducteur (7) et engager axialement sur ledit arbre de soufflante des paliers (13, 14) ainsi que leur support (11),
- engager un arbre d'entrée (8) axialement à l'intérieur dudit réducteur, jusqu'à ce que les premières cannelures (20) de cet arbre coopèrent avec des cannelures d'un solaire du réducteur,
- monter cet assemblage dans un carter intermédiaire (2) et le fixer à ce carter par des moyens appropriés,
- monter des moyens (25) d'alimentation en huile desdits paliers, et
- engager ledit premier arbre (15) par translation axiale dans ledit arbre d'entrée (8) jusqu'à leur accouplement par les secondes et troisièmes cannelures (18, 19) et fixer ledit support (11) des paliers (13, 14) au carter intermédiaire (2).

## Patentansprüche

1. Turbomaschine (1) für ein Luftfahrzeuggetriebe, umfassend eine erste Welle (15) und eine zweite Welle (3), die eine selbe Drehachse aufweisen, wobei die zweite Welle über ein Getriebe (7) von der ersten Welle in Drehung versetzt wird, wobei die erste Welle elastisch verformbare erste Mittel umfasst, die ihr im Betrieb eine gewisse Flexibilität verleihen, wobei die verformbaren ersten Mittel mindestens einen ersten ringförmigen Faltenbalg (16) umfassen, der sich um die Achse erstreckt, **dadurch gekennzeichnet, dass** die erste Welle (15) einen über ein Verbindungssystem, das eine Eingangswelle (8) umfasst, mit dem Getriebe (7) gekoppelten Abschnitt (15a) umfasst, wobei die Eingangswelle (8) erste Nuten (20) zur Kopplung an das Getriebe (7) und zweite Nuten (19) zur Kopplung an dritte Nuten (18) umfasst, die komplementär zum Abschnitt (15a) der ersten Welle (15) sind, wobei der Abschnitt (15a) der ersten Welle (15) eine allgemeine rohrförmige Form um die Achse aufweist und einen stromabwärtigen Teil (15ab), der den mindestens einen ersten Faltenbalg (16) umfasst, und einen zylindrischen stromaufwärtigen Teil (15aa) umfasst, der von der Eingangswelle (8) umgeben ist, wobei diese Eingangswelle mindestens einen ringförmigen Teil (17) umfasst, der sich um die Achse erstreckt und der einen U- oder C-förmigen Schnitt aufweist und eine ringförmige Öffnung um die Achse definiert, wobei dieser ringförmige Teil elastisch verformbare zweite Mittel bildet, die ihm im Betreib eine gewisse Flexibilität verleihen.

2. Turbomaschine nach Anspruch 1, wobei der im U-förmigem Schnitt ringförmige Teil (17) eine ringförmige Öffnung definiert, die in die axiale Richtung mündet.

3. Turbomaschine (1) nach der Gesamtheit der vorstehenden Ansprüche, wobei sich der mindestens eine erste Faltenbalg (16) radial zwischen einem Durchmesser (Dm) gleich demjenigen der dritten Nuten (18) und einem Durchmesser (DM) gleich demjenigen der ersten Nuten (20) erstreckt.

4. Turbomaschine (1) nach einem der vorstehenden Ansprüche, wobei die Eingangswelle (8) einen äußeren ringförmigen Zweig (8b) zur Kopplung an das Getriebe (7) und einen inneren ringförmigen Zweig (8a) zur Kopplung an den stromaufwärtigen Teil (15aa) der ersten Welle (15) umfasst.

5. Turbomaschine (1) nach Anspruch 4, wobei die Zweige (8a, 8b) durch einen ringförmigen Steg (21) miteinander verbunden sind, der an seiner Verbindungsstelle mit dem äußeren Zweig (8b) eine Dickenverjüngung (22) aufweist.

6. Turbomaschine (1) nach Anspruch 3 oder 4, wobei der äußere Zweig (8b) ein stromabwärtiges Ende, das sich in der Nähe eines stromaufwärtigen Endes des mindestens einen ersten Faltenbalgs (16) befindet, und/oder einen Durchmesser aufweist, der größer ist als ein Außendurchmesser des mindestens einen ersten Faltenbalgs.

7. Turbomaschine (1) nach einem der Ansprüche 3 bis 5, wobei mindestens ein Teil des mindestens einen ersten Faltenbalgs (16) von dem äußeren Zweig (8b) umgeben ist.

8. Turbomaschine (1) nach einem der Ansprüche 3 bis 6, wobei sich der innere Zweig (8a) stromaufwärts jenseits des Stegs (21) ausdehnt und äußere ringförmige Lippen (23) trägt, die durch eine Labyrinthwirkung mit dem Innenumfang einer ringförmigen Abdeckung (24), die von der zweiten Welle (3) getragen wird, zusammenwirken.

9. Turbomaschine (1) nach einem der vorstehenden Ansprüche, wobei die Anzahl von ersten Faltenbälgen (16) größer als zwei ist.

10. Turbomaschine nach Anspruch 1, wobei der im U-förmigen Schnitt ringförmige Teil (17) eine ringförmige Öffnung definiert, die radial in die Innenseite mündet, wobei dieser ringförmige Teil einen zweiten Faltenbalg (40) bildet.

11. Turbomaschine nach Anspruch 10, wobei sich der erste Faltenbalg (17) stromabwärts des Getriebes (7) befindet und sich der zweite Faltenbalg (40) stromaufwärts des Getriebes (7) befindet.

12. Turbomaschine nach Anspruch 10 oder 11, wobei der ringförmige Teil (17) ein axialer Zwischenteil der Eingangswelle (8) ist, der einen stromaufwärtigen zylindrischen Teil, der die zweiten Nuten (19) umfasst, sowie einen stromabwärtigen zylindrischen Teil umfasst, der die ersten Nuten (20) umfasst.

13. Turbomaschine (1) nach einem der vorstehenden Ansprüche, wobei die Längsenden mindestens gewisser der Nuten (18, 19, 20) durch maschinelle Verarbeitung abgeschnitten sind.

14. Turbomaschine (1) nach einem der vorstehenden Ansprüche, wobei mindestens gewisse der Nuten (18, 19, 20) gewölbte Seitenflächen umfassen, wobei sich diese Seitenflächen zwischen den Längsenden dieser Nuten erstrecken.

15. Turbomaschine (1) nach einem der vorstehenden Ansprüche, wobei der oder jeder Faltenbalg (16, 40) einen ringförmigen Boden (16a, 40a) umfasst, der eine Vielzahl von Öffnungen (30, 42) zum Durchlassen von Öl im Betrieb umfasst.

16. Turbomaschine (1) nach einem der vorstehenden Ansprüche, wobei die erste Welle (15) eine Niederdruck-Verdichterwelle ist.

17. Verfahren zur Montage einer Turbomaschine nach einem der vorstehenden Ansprüche, umfassend die Schritte, die bestehen aus:
- Verbinden der zweiten Welle (3), die eine Gebläsewelle ist, mit einer Ausgangswelle des Getriebes (7) und axiales Eingreifen auf der Gebläsewelle der Lager (13, 14) sowie ihrer Stütze (11),
- axiales Eingreifen einer Eingangswelle (8) in die Innenseite des Getriebes, bis die ersten Nuten (20) dieser Welle mit Nuten eines Sonnenrads des Getriebes zusammenwirken,
- Montieren dieser Anordnung in ein dazwischen liegendes Gehäuse (2) und Befestigen derselben an diesem Gehäuse durch geeignete Mittel,
- Montieren von Ölzuleitungsmitteln (25) der Lager, und
- Eingreifen der ersten Welle (15) durch axiale Verlagerung in der Eingangswelle (8) bis zu deren Kopplung durch die zweiten und dritten Nuten (18, 19) und Befestigen der Stütze (11) der Lager (13, 14) am dazwischen liegenden Gehäuse (2).

## Claims

1. An aircraft turbomachine (1) with reduction gear, comprising a first shaft (15) and a second shaft (3) having the same axis of rotation, the second shaft being driven in rotation via a reduction gear (7) by the first shaft, the first shaft comprising first elastically deformable means giving it a certain flexibility in operation, said first deformable means comprising at least one first annular bellows (16) extending around said axis, **characterised in that** the first shaft (15) comprises a portion (15a) coupled to the reduction gear (7) by a connecting system comprising an input shaft (8), the input shaft (8) comprising first splines (20) for coupling to the reduction gear (7) and second splines (19) for coupling to third splines (18) complementary to said portion (15a) of said first shaft (15), the portion (15a) of said first shaft (15) having a generally tubular shape around said axis, and comprising a downstream part (15ab) comprising said at least one first bellows (16) and a cylindrical upstream part (15aa) which is surrounded by said input shaft (8), said input shaft comprising at least one annular part (17) which extends around said axis and which has a U- or C-shaped cross-section and defines an annular opening around said axis, said annular part forming second elastically deformable means giving it a certain flexibility in operation.

2. The turbomachine according to claim 1, wherein said annular part (17) with a U-shaped cross-section defines an annular opening which opens in the axial direction.

3. The turbomachine (1) according to the preceding claims wherein said at least one first bellows (16) extends radially between a diameter (Dm) equal to that of said third splines (18) and a diameter (DM) equal to that of said first splines (20).

4. The turbomachine (1) according to any one of the preceding claims, wherein the said input shaft (8) comprises an external annular leg (8b) for coupling to said reduction gear (7), and an internal annular leg (8a) for coupling to the upstream part (15aa) of said first shaft (15).

5. The turbomachine (1) according to claim 4, wherein the legs (8a, 8b) are connected to each other by an annular web (21) having a thinning in thickness (22) at its connection to said external leg (8b).

6. The turbomachine (1) according to claim 3 or 4, wherein the external leg (8b) has a downstream end located near an upstream end of said at least one first bellows (16), and/or a diameter which is greater than an external diameter of said at least one first bellows.

7. The turbomachine (1) according to any one of claims 3 to 5, wherein at least one part of said at least one first bellows (16) is surrounded by said external leg (8b).

8. The turbomachine (1) according to any one of claims 3 to 6, wherein the inner leg (8a) extends the upstream beyond the web (21) and carries external annular sealing elements (23) which cooperate by labyrinth effect with the inner periphery of an annular cowl (24) carried by said second shaft (3).

9. The turbomachine (1) according to any one of the preceding claims, in which the number of first bellows (16) is greater than two.

10. The turbomachine according to claim 1, wherein said annular part (17) with a U-shaped cross-section defines an annular opening which opens radially inwards, this annular part forming a second bellows (40).

11. The turbomachine according to claim 10, wherein the first bellows (17) is located downstream of the reduction gear (7), and the second bellows (40) is located upstream of the reduction gear (7).

12. The turbomachine according to claim 10 or 11, wherein said annular part (17) is an intermediate axial part of the input shaft (8) which comprises an upstream cylindrical part comprising said second splines (19) and a downstream cylindrical part comprising said first splines (20).

13. The turbomachine (1) according to any one of the preceding claims, wherein at least some of said splines (18, 19, 20) have their longitudinal ends truncated by machining.

14. The turbomachine (1) according to any one of the preceding claims, wherein at least some of said splines (18, 19, 20) comprise curved side faces, said side faces extending between the longitudinal ends of said splines.

15. The turbomachine (1) according to any one of the preceding claims, wherein the or each bellows (16, 40) comprises an annular bottom (16a, 40a) which comprises a plurality of oil passage orifices (30, 42) in operation.

16. The turbomachine (1) according to any one of the preceding claims, wherein said first shaft (15) is a low pressure compressor shaft.

17. A method of mounting a turbomachine according to any one of the preceding claims, comprising the steps of:
- connecting said second shaft (3), which is a fan shaft, to an output shaft of said reduction gear (7) and axially engaging on said fan shaft bearings (13, 14) and their support (11),
- engaging an input shaft (8) axially inside said reduction gear until the first splines (20) of this shaft cooperate with splines of a sun gear of the reduction gear,
- mounting this assembly in an intermediate casing (2) and secure it to this casing by suitable means,
- mounting means (25) for supplying oil to said bearings, and
- engaging said first shaft (15) by axial translation in said input shaft (8) until they are coupled by the second and third splines (18, 19) and fix said support (11) of the bearings (13, 14) to the intermediate casing (2).
